# EUROPEAN PATENT SPECIFICATION

(11) **EP 2 855 391 B1**
(45) Date of publication and mention of the grant of the patent: **06.02.2019**
(21) Application number: 13721638.8
(22) Date of filing: 30.04.2013
(51) Int. Cl.: C04B 24/16, C04B 24/26, C04B 40/00, C04B 28/02, C04B 103/12, C04B 103/52

(54) **PULVERULENT ACCELERATOR**
PULVERFÖRMIGER BESCHLEUNIGER
ACCÉLÉRATEUR PULVÉRULENT

(30) Priority: 29.05.2012 EP 12169850
(43) Date of publication of application: 08.04.2015
(73) Proprietor: Construction Research & Technology GmbH, 83308 Trostberg (DE)
(72) Inventor: LANGLOTZ, Jutta Karin, 83308 Trostberg (DE); FRIEDRICH, Stefan, 84518 Garching (DE); HESSE, Christoph, 85560 Ebersberg (DE)
(74) Representative: BASF IP Association
(86) International application number: PCT/EP2013/058959
(87) International publication number: WO 2013/178417

(56) References cited:
- EP-A2- 1 897 927
- WO-A1-01/05365
- WO-A1-2010/026155
- WO-A1-2012/072466
- JP-A- H01 224 253
- JP-A- 2007 238 359

## Description

The present invention concerns a solid pulverulent composition comprising calcium silicate hydrate, where the calcium silicate hydrate does not originate from a hydration reaction of (portland) cement with water, and at least one water-soluble cationic (co)polymer, the (co)polymer comprising the following structural units:
a) 0 to 100 mol% of cationic structural units according to the general formula (I) 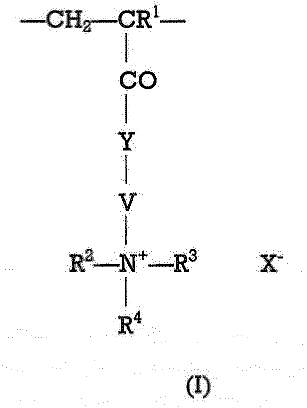 in which
   - R¹: is in each case identical or different and is represented by hydrogen and/or a methyl radical,
   - R² and R³: are in each case identical or different and independently of one another are each represented by hydrogen, an aliphatic hydrocarbon radical having 1 to 20 C atoms (branched or unbranched, preferably methyl or ethyl radical), a cycloaliphatic hydrocarbon radical having 5 to 8 C atoms (more particularly cyclohexyl radical) and/or an aryl radical having 6 to 14 C atoms (more particularly phenyl radical),
   - R⁴: is in each case identical or different and is represented by a substituent identical to R² or R³ or by -(CH₂)ₓ-SO₃Mₖ, SO₃Mₖ, 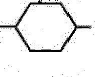 SO₃Mₖ and/or 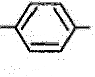
   - M: is in each case identical or different and is represented by a monovalent or divalent metal cation, ammonium cation (NH₄⁺) and/or quaternary ammonium cation (NR₁R₂R₃R₄)⁺,
   - k: is in each case identical or different and is represented by ½ and/or 1,
   - Y: is in each case identical or different and is represented by oxygen, -NH and/or -NR²,
   - V: is in each case identical or different and is represented by -(CH₂)ₓ-, 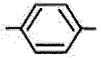 , and/or 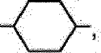
   - x: is in each case identical or different and is represented by an integer from 1 to 6 (preferably 1 or 2),
   - X: is in each case identical or different and is represented by a halogen atom (preferably Cl or Br), C₁- to C₄-alkylsulphate (preferably methylsulphate) and/or C₁- to C₄-alkylsulphonate (preferably methylsulphonate), and/or
b) 0 to 100 mol% of cationic structural units according to the general formula (II) 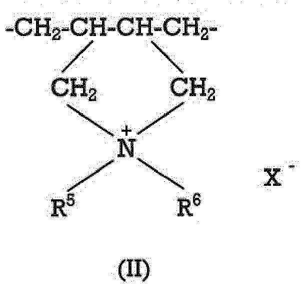
   - R⁵, R⁶ =: hydrogen, aliphatic hydrocarbon radical having 1 to 6 C atoms, phenyl radical optionally substituted by methyl groups,
   with the proviso that the sum of the cationic structural units according to the general formula (I) and/or the general formula (II) is at least 5 mol%, based on all structural units, characterized in that the (co)polymer comprises no structural units which derive from monomers which have more than one radically polymerizable, ethylenically unsaturated vinyl group and/or other crosslinking structural units and that the weight ratio of the (co)polymer to the calcium silicate hydrate is from 5:1 to 1:3.

Additionally concerned is a process for producing preferably pulverulent compositions, where the following process steps are carried out:
a) contacting an aqueous suspension of calcium silicate hydrate with at least one (co)polymer according to any of Claims 1 to 5, and
b) drying the product from step a), preferably at temperatures between 30 and 80°C, especially at temperatures between 40 and 60°C.

The invention relates to the use of compositions according to any of Claims 1 to 5 as setting accelerators in building material mixtures comprising (portland) cement, slag sand, fly ash, silica dust, metakaolin, natural pozzolans, burnt oil shale and/or calcium aluminate cement, or in building material mixtures comprising (portland) cement and calcium sulphate-based binders, preferably in building material mixtures which as hydraulic binder comprise substantially (portland) cement. Also concerned is the use of compositions according to any of Claims 1 to 5 as grinding aids in the production of (portland) cement.

The invention also treats building material mixtures comprising compositions according to any of Claims 1 to 5 and (portland) cement, slag sand, fly ash, silica dust, metakaolin, natural pozzolans, burnt oil shale and/or calcium aluminate cement, or building material mixtures comprising compositions according to any of Claims 1 to 5, (portland) cement and calcium sulphate-based binders, preferably building material mixtures which as hydraulic binder comprise substantially (portland) cement.

Pulverulent setting accelerators for cementitious building material mixtures, which on account of their solid aggregate state are suitable in principle for use in dry mortar mixtures, are known in the prior art. Examples of such accelerators are calcium nitrate, calcium formate, calcium chloride and lithium carbonate. One disadvantage of chloride- or nitrate-containing accelerators is the adverse effects thereof on the corrosion resistance of, for example, steel-reinforced concrete. Owing to national standards, there are restrictions on use. Efflorescence on the surface of set building materials may likewise be a problem, especially when using calcium salts (for example calcium formate).

In many applications there is a need to achieve even greater acceleration of setting and higher early strengths in cementitious systems, such as in mortar or concrete, for example. The abovementioned types of accelerator, and other customary commercial accelerators, however, do not currently enable the skilled person to achieve this objective; even with the customary commercial accelerators, a naturally unwanted loss of ultimate strength is observed, particularly at relatively high levels of addition. There is a great need, therefore, in many applications, to achieve higher early strengths, and this is not possible with the accelerators presently known in the prior art.

Suspensions of calcium silicate hydrate (C-S-H) have been used in recent times as highly efficient accelerators in (portland) cement-containing building material mixtures, such as concrete. They make it possible to obtain significantly higher early strengths (6 hours) compared to the commercially customary accelerators. At the same time there is substantially no decrease observed in the ultimate strengths (28 days). Corresponding suspensions are described in WO 2010026155 A1. For practical reasons, however, it is not possible to formulate dry mortar mixtures which comprises as binders substantially (portland) cement using the water-containing suspensions of calcium silicate hydrate (C-S-H), since the water content would lead to an unacceptable, at least partial premature hydration of the binder.

WO2012072466 with a filing date of 23 November 2011, describes solid compositions comprising calcium silicate hydrate and at least one water-swellable polymer which is able to form a hydrogel. The water-swellable polymer in this case is a superabsorbent, which is insoluble in water. The water-swellable polymer which is able to form a hydrogel with water or aqueous solutions is selected from the group of anionic crosslinked polyelectrolytes, cationic crosslinked polyelectrolytes, ampholytic crosslinked polyelectrolyates and/or nonionic crosslinked polymers.

In the specialist field of (portland) cement-containing dry mortar mixtures, in the same way as for non-dry mortar applications such as concrete, there is a great demand for suitable, highly active accelerators, in order thus to allow a distinct rise in early strengths in dry mortar systems as well, preferably without losses in terms of the ultimate strengths (strengths after 28 days).

An object of the present invention, therefore, is to provide accelerators which overcome the abovementioned disadvantages of the prior art. The accelerators are intended more particularly to allow an effective rise in the early strengths, while retaining good compatibility at the same time, in dry mortar mixtures, with water-sensitive binders and/or with binders that set hydraulically with water, such as (portland) cement, for example. An especially preferred object is that, with the early strengths effectively increased, the ultimate strengths of the building material mixtures are not adversely affected.

The object of the invention is achieved by means of a solid pulverulent composition as defined in claims 1 to 5 comprising calcium silicate hydrate and at least one water-soluble cationic (co)polymer, the (co)polymer comprising the following structural units:
a) 0 to 100 mol% of cationic structural units according to the general formula (I) and/or
b) 0 to 100 mol% of cationic structural units according to the general formula (II),
with the proviso that the sum of the cationic structural units according to the general formula (I) and/or the general formula (II) is at least 5 mol%, preferably at least 10 mol%, with more particular preference at least 20 mol%, based on all structural units. "Structural unit" means preferably that the structural unit referred to is to be the structural unit introduced by radical polymerization of monomers. The details of the structural formulae (I) and (II) have been stated in the text above.

The object is additionally achieved by means of a process for producing preferably pulverulent compositions, where the following process steps are carried out:
a) contacting an aqueous suspension of calcium silicate hydrate with at least one (co)polymer according to any of Claims 1 to 5, and
b) drying the product from step a), preferably at temperatures between 30 and 80°C, especially at temperatures between 40 and 60°C.

The object is likewise achieved through the use of compositions according to any of Claims 1 to 5 as setting accelerators in building material mixtures comprising (portland) cement, slag sand, fly ash, silica dust, metakaolin, natural pozzolans, burnt oil shale and/or calcium aluminate cement, or in building material mixtures comprising (portland) cement and calcium sulphate-based binders, preferably in building material mixtures which as hydraulic binder comprise substantially (portland) cement. The object is also solved by the use of compositions according to any of Claims 1 to 5 as grinding aids in the production of (portland) cement.

Building material mixtures comprising compositions according to any of Claims 1 to 5 and (portland) cement, slag sand, fly ash, silica dust, metakaolin, natural pozzolans, burnt oil shale and/or calcium aluminate cement, or building material mixtures comprising compositions according to any of Claims 1 to 5, (portland) cement and calcium sulphate-based binders, preferably building material mixtures which as hydraulic binder comprise substantially (portland) cement likewise achieve the stated object.

The composition of the invention is present in the solid aggregate state. The composition is pulverulent and is suitable preferably as a setting and hardening accelerator for (portland) cement-containing binder systems. The water fraction in the solid composition of the invention ought preferably to be less than 15% by weight, more preferably less than 10% by weight.

The solid composition of the invention is preferably an accelerator composition. It comprises an organic component and an inorganic component. The inorganic component may be regarded as modified, finely divided calcium silicate hydrate (C-S-H) which may comprise extraneous ions such as magnesium, aluminium or sulphate.

The calcium silicate hydrate (as a starting material for further processing) may initially be prepared in the form of an aqueous suspension, preferably in the presence of a comb polymer plasticizer, as described in WO 2010/026155 A1. The suspensions can be prepared preferably by a process according to any of Claims 1 to 14 or 15 to 38 of WO 2010/026155 A1. In this case the reaction is preferably between a water-soluble calcium compound and a water-soluble silicate compound, with the reaction of the water-soluble calcium compound with the water-soluble silicate compound taking place in the presence of an aqueous solution which comprises a water-soluble comb polymer which is suitable as a plasticizer for hydraulic binders.

The calcium silicate hydrate (as a starting material for further processing) may also be obtained in the form of an aqueous suspension, preferably by reacting a water-soluble calcium compound with a water-soluble silicate compound, the reaction of the water-soluble calcium compound with the water-soluble silicate compound taking place in the presence of an aqueous solution which preferably comprises a (co)polymer having carboxylic acid groups and/or carboxylate groups and sulphonic acid groups and/or sulphonate groups, the molar ratio of the number of carboxylic acid groups and/or carboxylate groups to the sulphonic acid groups and/or sulphonate groups being from 1/20 to 20/1, preferably 1/5 to 5/1, more preferably 1/2 to 2/1.

Corresponding processes are described in WO2012143206.

The suspension typically obtained in this case is a suspension comprising the calcium silicate hydrate (C-S-H) in finely divided form. The solids content of the suspension is preferably between 5% and 35% by weight, more preferably between 10% and 30% by weight, especially preferably between 15% and 25% by weight.
The inorganic calcium silicate hydrate (C-S-H) component can be described in the majority of cases, in terms of its composition, by the following empirical formula:
a CaO, SiO₂, b Al₂O₃, c H₂O, d Z₂O, e WO
Z is an alkali metal
W is an alkaline earth metal, W preferably being an alkaline earth metal which is different from calcium,

| | | |
|---|---|---|
| 0.1 ≤ a ≤ 2 | preferably | 0.66 ≤ a ≤ 1.8 |
| 0 ≤ b ≤ 1 | preferably | 0 ≤ b ≤ 0.1 |
| 1 ≤ c ≤ 6 | preferably | 1 ≤ c ≤ 6.0 |
| 0 ≤ d ≤ 1 | preferably | 0 ≤ d ≤ 0.4 |
| 0 ≤ e ≤ 2 | preferably | 0 ≤ e ≤ 0.1 |

With particular preference the molar ratios are selected such that the preferred ranges for a, b and e are satisfied in the empirical formula above (0.66 ≤ a ≤ 1.8; 0 ≤ b ≤ 0.1; 0 ≤ e ≤ 0.1).

The calcium silicate hydrate in the compositions of the invention is preferably in the form of foshagite, hillebrandite, xonotlite, nekoite, clinotobermorite, 9Å - tobermorite (riversiderite), 11Å - tobermorite, 14 Å - tobermorite (plombierite), jennite, metajennite, calcium chondrodite, afwillite, α - C₂SH, dellaite, jaffeite, rosenhahnite, killalaite and/or suolunite, more preferably in the form of xonotlite, 9Å-tobermorite (riversiderite), 11Å - tobermorite, 14 Å - tobermorite (plombierite), jennite, metajennite, afwillite and/or jaffeite. The molar ratio of calcium to silicon in the calcium silicate hydrate is preferably from 0.6 to 2 and more preferably from 0.8 to 1.8, especially preferably from 1.0 to 1.5. The molar ratio of calcium to water in the calcium silicate hydrate is preferably 0.6 to 6, more preferably 0.6 to 4 and especially preferably 0.8 to 2.

The particle size of the calcium silicate hydrate (C-S-H) in the solid compositions of the invention is preferably less than 1000 nm, more preferably less than 500 nm and especially preferably less than 200 nm, measured by light scattering using the ZetaSizer Nano instrument from Malvern.

The organic component of the composition constitutes a water-soluble cationic (co)polymer, the (co)polymer comprising the following structural units:
a) 0 to 100 mol% of cationic structural units, preferably 0 to 80 mol%, more preferably 10 to 70 mol%, according to the general formula (I) 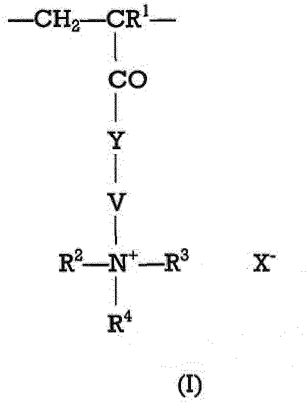 in which
   - R¹: is in each case identical or different and is represented by hydrogen and/or a methyl radical,
   - R² and R³: are in each case identical or different and independently of one another are each represented by hydrogen, an aliphatic hydrocarbon radical having 1 to 20 C atoms (branched or unbranched, preferably methyl or ethyl radical), a cycloaliphatic hydrocarbon radical having 5 to 8 C atoms (more particularly cyclohexyl radical) and/or an aryl radical having 6 to 14 C atoms (more particularly phenyl radical),
   - R⁴: is in each case identical or different and is represented by a substituent identical to R² or R³ or by -(CH₂)ₓ-SO₃Mₖ, 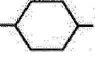 SO₃Mₖ and/or 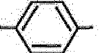 SO₃Mₖ,
   - M: is in each case identical or different and is represented by a monovalent or divalent metal cation, ammonium cation (NH₄⁺) and/or quaternary ammonium cation (NR₁R₂R₃R₄)⁺,
   - k: is in each case identical or different and is represented by ½ and/or 1,
   - Y: is in each case identical or different and is represented by oxygen, -NH and/or -NR²,
   - V: is in each case identical or different and is represented by 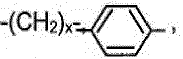 and/or 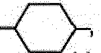
   - x: is in each case identical or different and is represented by an integer from 1 to 6 (preferably 1 or 2),
   - X: is in each case identical or different and is represented by a halogen atom (preferably Cl or Br), C₁- to C₄-alkylsulphate (preferably methylsulphate) and/or C₁- to C₄-alkylsulphonate (preferably methylsulphonate), and/or
b) 0 to 100 mol% of cationic structural units, preferably 20 to 100 mol%, more preferably 30 to 100 mol%, according to the general formula (II) 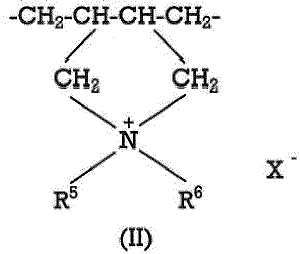
   - R⁵, R⁶ =: hydrogen, aliphatic hydrocarbon radical having 1 to 6 C atoms, phenyl radical optionally substituted by methyl groups,
   with the proviso that the sum of the cationic structural units according to the general formula (I) and/or the general formula (II) is at least 5 mol%, based on all structural units. The (co)polymer comprises no structural units which derive from monomers which have more than one radically polymerizable, ethylenically unsaturated vinyl group and/or other crosslinking structural units.

The (co)polymers in question are preferably preparable from a radical (co)polymerization of corresponding unsaturated cationic monomers. The molecular weight M_{w} of the (co)polymers thus prepared is typically more than 100 000 g/mol, more preferably more than 300 000 g/mol.

The structural unit a) originates preferably from the polymerization of one or more of the monomer species [2-(acryloyloxy)ethyl]trimethylammonium chloride, [2-(acryloylamino)ethyl]trimethylammonium chloride, [2-(acryloyloxy)ethyl]-trimethylammonium methosulphate, [2-(methacryloyloxy)ethyl]trimethylammonium chloride and/or methosulphate, [3-(acryloylamino)propyl]trimethylammonium chloride, [3-(methacryloylamino)propyl]trimethylammonium chloride, N-(3-sulphopropyl)-N-methacryloyloxyethyl-N',N-dimethylammonium betaine, N-(3-sulphopropyl)-N-methacrylamidopropyl-N,N-dimethylammonium betaine and/or 1-(3-sulphopropyl)-2-vinylpyridinium betaine. Preference is given to [2-(acryloyloxy)ethyl]trimethylammonium chloride, [2-(acryloylamino)ethyl]trimethylammonium chloride, [2-(methacryloyloxy)-ethyl]trimethylammonium chloride, [3-(acryloylamino)propyl]trimethylammonium chloride and [3-(methacryloylamino)propyl]trimethylammonium chloride. Particularly preferred are [2-(methacryloyloxy)ethyl]trimethylammonium chloride, [3-(acryloylamino)propyl]trimethylammonium chloride and [3-(methacryloylamino)-propyl]trimethylammonium chloride. The structural unit b) derives preferably from N,N-dimethyldiallylammonium chloride and/or N,N-diethyldiallylammonium chloride.

The cationic structural units a) and b) are present in the (co)polymer with the proviso that the sum of the cationic structural units according to the general formula (I) and/or the general formula (II) is at least 5 mol%, based on all structural units. It is therefore possible for the structural unit a) to be the only cationic structural unit in the (co)polymer, or else only the structural unit b), or else the cationic structural units a) and b) together. Anionic structural units c) containing sulpho groups and/or structural units d) containing amido groups may be present in the (co)polymer in the case, for example, of (co)polymers that are not purely cationic. Particularly preferred are the structural units b) containing amido groups. The structural units c) and d) are described in more detail in the text below. The structural units a) and b) may make up to 100 mol% of the (co)polymer, which in that case corresponds to a homopolymer.

It has surprisingly been found that the cationic (co)polymers are especially suitable as a stabilizing additive during the operation of drying accelerator suspensions containing calcium silicate hydrate. Preference is given to solid compositions comprising calcium silicate hydrate and at least one water-soluble cationic (co)polymer, where the weight ratio of the (co)polymer to the calcium silicate hydrate is from 2:1 to 1:2.

The accelerator activity here can be largely maintained.

Preferred compositions are those where the water-soluble cationic (co)polymer comprises c) 1 to 95 mol% of anionic, sulpho-group-containing structural units according to the general formula (III) 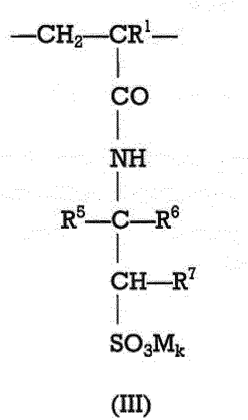
- R¹, R⁵ and R⁶: each have, with the proviso, the definitions stated above, and
- R⁷ =: hydrogen, aliphatic hydrocarbon radical having 1 to 6 C atoms, phenyl radical optionally substituted by methyl groups
- M =: hydrogen, monovalent or divalent metal cation, ammonium or an organic amine radical
- a =: ½ or 1.

In this preferred embodiment, in addition to the minimum fraction of 5 mol% of cationic structural units of the general structural formulae a) and/or b), there is also 1 up to a maximum of 95 mol% of anionic, sulpho-group-containing structural units c) present in the (co)polymer. The (co)polymers in question are therefore, in this case, ampholytic (co)polymers having both anionic and cationic structural units. The structural unit c) derives preferably from monomers such as 2-acrylamido-2-methylpropanesulphonic acid, 2-methacrylamido-2-methylpropanesulphonic acid, 2-acrylamidobutanesulphonic acid, 3-acrytamido-3-methyibutanesutphonic acid and/or 2-acrylamido-2,4,4-trimethylpentanesulphonic acid. Particularly preferred is 2-acrylamido-2-methylpropanesulphonic acid (ATBS).

Preferred compositions are those where the cationic (co)polymer comprises d) 10 to 95 mol% of amido-group-containing structural units according to the general formulae (IVa) and/or (IVb) 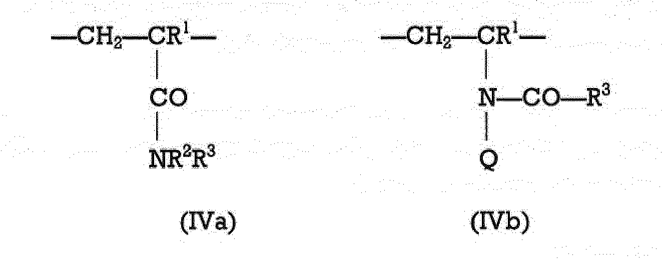 in which
- Q: is in each case identical or different and is represented by hydrogen and/or -CHR²R⁵,
- R¹, R² and R³: in each case have the definitions stated above, with the proviso that if Q is not hydrogen, R² and R³ in the general formula (IVb) may together be a -CH₂-(CH₂)_{y}-methylene group, and so the general formula (IVb) according to the following structure is present: 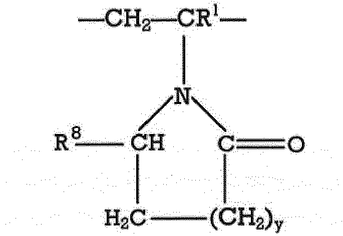
where
- R⁸: is in each case identical or different and is represented by a hydrogen atom, a C₁- to C₄-alkyl radical, a carboxylic acid group and/or a carboxylate group -COOMₖ, where y is identical or different and is represented by an integer from 1 to 4 (preferably 1 or 2), and M and k each have the definitions stated above.

In general the structural unit d) originates from the polymerization of one or more of the monomer species acrylamide, methacrylamide, N-methylacrylamide, N,N-dimethylacrylamide, N-ethylacrylamide, N-cyclohexylacrylamide, N-benzylacrylamide, N-methylolacrylamide, N-tert-butylacrylamide, etc. Examples of monomers as a basis for the structure (IVb) are N-methyl-N-vinylformamide, N-methyl-N-vinylacetamide, N-vinylpyrrolidone, N-vinylcaprolactam and/or N-vinylpyrrolidone-5-carboxylic acid. Preferred are acrylamide, methacrylamide and/or N,N-dimethylacrylamide.

Preferred compositions are those where 1 to 86 mol% of anionic, sulpho-group-containing structural units according to the general formula (III) and 9 to 94 mol% of amido-group-containing structural units according to the general formulae (IVa) and/or (IVb) are present in the (co)polymer.

Compositions are those where the weight ratio of the (co)polymer to the calcium silicate hydrate is from 5:1 to 1:3, preferably from 2:1 to 1:2. It is also possible for two or more of the (co)polymers of the invention to be present, in which case the weight ratio is calculated by forming the sum of all the masses of the (co)polymers. For example, mixtures of cationic and ampholytic (co)polymers may also be comprised. If the above-stated weight ratio of 5:1 is exceeded, it is hardly possible to expect any longer an improvement in the accelerator activity through the (co)polymers providing a stabilizing effect in the course of the drying operation, and, owing to the high level of (co)polymer use, the economics are adversely affected. If the weight ratio is below 1:3, the accelerator activity achieved after the drying of the calcium silicate hydrate suspensions begins to deteriorate, since there is too little (co)polymer available as a stabilizer during drying.

Preferably, the molecular weight of the (co)polymers is greater than 300 000 g/mol.

More preferred are the compositions characterized in that in the (co)polymers, based on the total molar number of all monomers, there is less than 20 mol% of carboxylic monomers in copolymerized form. Carboxylic structures, such as those originating from (meth)acrylic acid or maleic acid, for example, are relatively sensitive towards calcium ions. (Co)polymers with a substantial fraction of carboxylic acid structural units are ineffective as stabilizers during the drying of the calcium silicate suspensions, and form accelerators which are less active during the drying of finely divided calcium silicate hydrate (C-S-H).

The invention also relates to a process for producing the pulverulent compositions of the invention, where the following process steps are carried out:
a) contacting an aqueous suspension of calcium silicate hydrate with at least one (co)polymer according to any of Claims 1 to 5, and
b) drying the product from step a), preferably at temperatures between 30 and 80°C, especially at temperatures between 40 and 60°C.

Preferred processes are characterized in that the drying method used is drying in a forced-air drying cabinet or drying in a fluidized bed process.

Preference is given to a process characterized in that the aqueous suspension of calcium silicate hydrate has been obtained by reacting a water-soluble calcium compound with a water-soluble silicate compound, the reaction of the water-soluble calcium compound with the water-soluble silicate compound taking place in the presence of an aqueous solution which preferably comprises a water-soluble comb polymer which is suitable as a plasticizer for hydraulic binders.

Preference is given to a process characterized in that the aqueous suspension of calcium silicate hydrate has been obtained by reacting a water-soluble calcium compound with a water-soluble silicate compound, the reaction of the water-soluble calcium compound with the water-soluble silicate compound taking place in the presence of an aqueous solution which preferably comprises a (co)polymer containing carboxylic acid groups and/or carboxylate groups and sulphonic acid groups and/or sulphonate groups, the molar ratio of the number of carboxylic acid groups and/or carboxylate groups to the sulphonic acid groups and/or sulphonate groups being from 1/20 to 20/1, preferably 1/5 to 5/1, more preferably 1/2 to 2/1.

Preference is given to a process characterized in that there follows a process step c) which comprises the grinding of the dried products from process step b) to powders.

The invention also relates to the use of the compositions of the invention as setting accelerators in building material mixtures comprising (portland) cement, slag sand, fly ash, silica dust, metakaolin, natural pozzolans, burnt oil shale and/or calcium aluminate cement, or in building material mixtures comprising (portland) cement and calcium sulphate-based binders, preferably in building material mixtures which as hydraulic binder comprise substantially (portland) cement. The building material mixtures preferably comprise water, more preferably in a weight ratio of water to powder (W/P) of 0.2 to 0.8, where powder is understood to be the sum of the binders, preferably (portland) cement, present in the building material mixture.

The invention also relates to the use of the compositions of the invention as grinding aids in the production of (portland) cement, slag, fly ash, lime and/or pozzolans, preferably (portland) cement.

The invention relates to building material mixtures comprising the compositions of the invention and (portland) cement, slag sand, fly ash, silica dust, metakaolin, natural pozzolans, burnt oil shale and/or calcium aluminate cement, or building material mixtures comprising the compositions of the invention, (portland) cement and calcium sulphate-based binders, preferably building material mixtures which as hydraulic binder comprise substantially (portland) cement.

Drying experiments (for comparison) of finely divided calcium silicate hydrate (C-S-H) without a stabilizer or with addition of non-inventive substances resulted in less effective accelerators. This is attributed to agglomeration of the calcium silicate hydrate (C-S-H) particles in the absence of the stabilizer of the invention. Only through the use of the cationic (co)polymers of the invention did it become possible to stabilize the finely divided calcium silicate hydrate particles largely stable in the aqueous suspension in such a way, in the course of drying as well, that they can be converted into the solid aggregate state with substantially no loss of activity (as accelerators).

Preference is given to solid compositions comprising calcium silicate hydrate and at least one as-claimed water-soluble cationic (co)polymer, where the calcium silicate hydrate does not originate from a hydration reaction of (portland) cement with water.

Preference is given to solid compositions comprising calcium silicate hydrate and at least one water-soluble cationic (co)polymer of the invention, where the solid composition comprises no (portland) cement. Particularly preferred are solid compositions comprising calcium silicate hydrate and at least one water-soluble cationic (co)polymer of the invention, where the solid composition comprises no (portland) cement that has come into contact with water. (Portland) cement which has come into contact with water is intended here to include mixtures of (portland) cement and water that have since been dried, and these mixtures may include a - preferably small- water fraction.

Preferably both the cationic and the ampholytic (co)polymers are produced by radical polymerization of corresponding monomers.

The (co)polymerization of the monomers takes place preferably by radical bulk, solution, gel, emulsion, dispersion or suspension polymerization. Since the products of the invention are hydrophilic (co)polymers, preference is given to the polymerization in aqueous phase, polymerization in inverse emulsion or polymerization in inverse suspension. In particularly preferred embodiments, the reaction takes place as a solution polymerization, gel polymerization or inverse suspension polymerization in organic solvents.

In one particularly preferred embodiment the preparation of the (co)polymers may be carried out as an adiabatic polymerization and may be initiated both with a redox initiator system and with a photoinitiator. In addition, a combination of both initiation variants is possible. The redox initiator system consists of at least two components, an organic or inorganic oxidizing agent and an organic or inorganic reducing agent. Frequently here compounds with peroxide units are used, examples being inorganic peroxides such as alkali metal and ammonium persulphate, alkali metal and ammonium perphosphates, hydrogen peroxide and its salts (sodium peroxide, barium peroxide) or organic peroxides such as benzoyl peroxide, butyl hydroperoxide or peracids such as peracetic acid. Besides these, however, it is also possible to use other oxidizing agents, as for example potassium permanganate, sodium and potassium chlorate, potassium dichromate, etc. The reducing agents used may be sulphur-containing compounds such as sulphites, thiosulphates, sulphinic acid, organic thiols (for example ethyl mercaptan, 2-hydroxyethanethiol, 2-mercaptoethylammonium chloride, thioglycolic acid) and others. Besides these, ascorbic acid and low-valency metal salts are possible [copper(I); manganese(II); iron(II)]. Phosphorus compounds can be used as well, for example sodium hypophosphite.

In the case of a photopolymerization, the reaction is initiated with UV light, which brings about the decomposition of a photoinitiator. The photoinitiator used may be, for example, benzoin and benzoin derivatives, such as benzoin ether, benzyl and its derivatives, such as benzyl ketals, aryldiazonium salts, azo initiators such as, for example, 2,2'-azobis(isobutyronitrile), 2,2'-azobis(2-amidinopropane) hydrochloride and/or acetophenone derivatives.
The weight fraction of the oxidizing and reducing components in the case of redox initiator systems is preferably in each case in the range between 0.00005% and 0.5% by weight, more preferably in each case between 0.001 % and 0.1% by weight. For photoinitiators this range is preferably between 0.001 % and 0.1% by weight, more preferably between 0.002% and 0.05% by weight. The stated % by weight figures for oxidizing and reducing components and photoinitiators are based in each case on the mass of the monomers used for the copolymerization.

The (co)polymerization is carried out preferably in aqueous solution, preferably in concentrated aqueous solution, discontinuously in a polymerization vessel (batch process) or continuously by the "continuous belt" method described in US-A-4857610. Another possibility is that of polymerization in a continuously or discontinuously operated kneading reactor. The operation is initiated typically at a temperature between -20 and 20°C, preferably between -10 and 10°C, and is carried out at atmospheric pressure without external supply of heat, with the heat of polymerization producing a maximum final temperature which is dependent on the monomer content and is from 50 to 150°C. After the end of the (co)polymerization, there is generally a comminution of the polymer, which is present in gel form. When carrying out the procedure on the laboratory scale, the comminuted gel is dried in a forced-air drying cabinet at 70 to 180°C, preferably at 80 to 150°C. On the industrial scale, drying may also take place continuously, for example on a belt dryer or in a fluidized bed dryer.

In another preferred embodiment, the (co)polymerization takes place as an inverse suspension polymerization of the aqueous monomer phase in an organic solvent. The procedure here is preferably to polymerize the monomer mixture, dissolved in water and optionally neutralized, in the presence of an organic solvent in which the aqueous monomer phase is insoluble or has a low solubility. It is preferred to operate in the presence of "water in oil" emulsifiers (W/O emulsifiers) and/or of protective colloids based on compounds of low or high molecular mass, which are used in fractions of 0.05% to 5% by weight, preferably 0.1% to 3% by weight, based on the monomers. The W/O emulsifiers and protective colloids are also referred to as stabilizers. It is possible to use customary compounds known as stabilizers in inverse suspension polymerization technology, such as hydroxypropylcellulose, ethylcellulose, methylcellulose, cellulose acetate butyrate mixed ethers, copolymers of ethylene and vinyl acetate, of styrene and butyl acrylate, polyoxyethylenesorbitan monooleate, laurate and stearate, and block copolymers formed from propylene oxide and/or ethylene oxide.

Organic solvents employed include, for example, linear aliphatic hydrocarbons such as n-pentane, n-hexane, n-heptane, branched aliphatic hydrocarbons (isoparaffins), cycloaliphatic hydrocarbons such as cyclohexane and decalin, and aromatic hydrocarbons such as benzene, toluene and xylene. Additionally suitable are alcohols, ketones, carboxylic esters, nitro compounds, halogenated hydrocarbons, ethers and many other organic solvents. Preferred organic solvents are those which form azeotropic mixtures with water, more preferably those which at the same time have a very high water fraction in the azeotrope.

The water-swellable (co)polymers are initially obtained in swollen form as finely divided aqueous droplets in the organic suspension medium and are isolated preferably by removal of the water to form solid spherical particles in the organic suspension medium. Removal of the suspension medium and drying leave a pulverulent solid. Inverse suspension polymerization is known to have the advantage that by varying the polymerization conditions it is possible to control the particle size distribution of the powders, which usually means that an additional process step (grind operation) to establish the particle size distribution can be avoided.

The solid pulverulent compositions of the invention are preferably used in dry mortar mixtures, more particularly in powder form.

The invention also relates to the use of the compositions of the invention as grinding aids in the production of (portland) cement, slag, fly ash, lime and/or pozzolans, preferably (portland) cement. The components identified above can be ground individually or else in any desired mixtures.

The compositions of the invention are preferably used in the grinding of the clinker or clinker blend to give (portland) cement. By clinker blend is meant preferably a mixture of clinker and substitutes such as slag, fly ash and/or pozzolans. The compositions are used here in amounts of 0.001% by weight to 5% by weight, preferably in amounts of 0.01% by weight to 0.5% by weight, based in each case on the clinker or clinker blend to be ground. It is possible to use the compositions of the invention as grinding aids in ball mills or else in vertical mills. The compositions of the invention can be used as grinding aids alone or else in combination with other grinding aids, such as, for example, mono-, di-, tri- and polyglycols, polyalcohols (for example glycerol of the varying purities, for example from biodiesel production), amino alcohols (e.g. MEA, DEA, TEA, TIPA, THEED, DIHEIPA), organic acids and/or salts thereof (e.g. acetic acid and/or salts thereof, formates, gluconates), amino acids, sugars and residues from sugar production (e.g. molasses, vinasse), inorganic salts (chlorides, fluorides, nitrates, sulphates) and/or organic polymers (e.g. polyether carboxylates (PCEs)). It has emerged that particularly the early strengths of the (portland) cement thus produced can be improved. Similarly, but not according to the present invention, the accelerator suspensions (in liquid form) disclosed in WO 2010026155 A1 and also the pulverulent accelerators disclosed in WO 2010026155 A1 are suitable as grinding aids in the production of (portland) cement from clinker or clinker blends. These grinding aids may likewise be used alone or in combination with the aforementioned list of grinding aids. In this case it is possible again to employ either a ball mill or a vertical mill.

Preference is given to building material mixtures comprising solid compositions of calcium silicate hydrate and at least one cationic (co)polymer of the invention and (portland) cement, slag sand, fly ash, silica dust, metakaolin, natural pozzolans, burnt oil shale and/or calcium aluminate cement, where the solid composition comprises no (portland) cement that has come into contact with water. (Portland) cement which has come into contact with water shall be understood here to include those mixtures of (portland) cement and water that have since dried and that may include a - preferably low - water fraction.

The building material mixtures may comprise, as other admixtures, defoamers, air pore formers, fillers, redispersible polymer powders, retardants, thickeners, water retention agents and/or wetting agents.

### Preparation examples

### Preparation example polymer 1

A 2 l polymerization reactor with stirrer, reflux condenser, thermometer and inert gas connection was charged with 592.6 g of water. With stirring 400 g (0.91 mol) of [3-(methacrylamido)propyl]trimethylammonium chloride (50% strength by weight aqueous solution) were added, and then the pH was adjusted to 7.0. The solution was rendered inert by being flushed with nitrogen for 30 minutes and was heated to 70°C. Subsequently, in succession, 1.2 g of tetraethylenepentamine (20% strength by weight aqueous solution) and 8.0 g of sodium peroxodisulphate (20% strength by weight aqueous solution) were added in order to initiate the polymerization. The batch was stirred at 70°C for 2 hours in order to complete the polymerization.

### Preparation example copolymer 2

A 2 l polymerization reactor with stirrer, reflux condenser, thermometer and inert gas connection was charged with 592.6 g of water. With stirring 356.3 g (0.81 mol) of [3-(methacrylamido)propyl]trimethylammonium chloride (50% strength by weight aqueous solution) and 43.7 g (0.10 mol) of the sodium salt of 2-acrylamido-2-methylpropanesulphonic acid (50% strength by weight aqueous solution) were added, and then the pH was adjusted to 7.0. The solution was rendered inert by being flushed with nitrogen for 30 minutes and was heated to 70°C. Subsequently, in succession, 1.2 g of tetraethylenepentamine (20% strength by weight aqueous solution) and 8.0 g of sodium peroxodisulphate (20% strength by weight aqueous solution) were added in order to initiate the polymerization. The batch was stirred at 70°C for 2 hours in order to complete the polymerization.

### Preparation example copolymer 3

A 2 l polymerization reactor with stirrer, reflux condenser, thermometer and inert gas connection was charged with 611.0 g of water. With stirring 360.0 g (0.82 mol) of [3-(methacrylamido)propyl]trimethylammonium chloride (50% strength by weight aqueous solution) and 20.0 g (0.28 mol) of *N*-vinylformamide were added, and then the pH was adjusted to 7.0. The solution was rendered inert by being flushed with nitrogen for 30 minutes and was heated to 70°C. Subsequently, 5.0 g of 2,2'-azobis(2-methylpropionamidine)dihydrochloride (10% strength by weight aqueous solution) were added in order to initiate the polymerization. After an hour, a further 5.0 g of 2,2'-azobis(2-methylpropionamidine)dihydrochloride (10% strength by weight aqueous solution) were added and the batch was stirred at 70°C for 1 hour more in order to complete the polymerization.

### Production example for accelerator powders:

The powders comprising calcium silicate hydrate were produced by mixing the aqueous solution of one or else two or more cationic water-soluble copolymer(s) with the C-S-H suspension DP1. DP1 is an aqueous calcium silicate hydrate suspension prepared from calcium acetate and Na₂SiO₃ in accordance with WO 2010026155 A1 and contains 5.4% by weight of MVA®2500 (product of BASF Construction Polymers GmbH, solids content 45.4% by weight). DP1 contains 1.85% by weight of CaO and 1.97% by weight of SiO₂. The figures given above in % by weight are based in each case on the overall aqueous suspension.

The C-S-H suspension DP1 was placed in a glass beaker and stirred with a finger stirrer. The corresponding amount (see Table 1) of the aqueous solution of the respective cationic water-soluble polymer was added carefully, and the resulting mixture was stirred for about 30 minutes more and then dried in a forced-air drying cabinet at 40°C for 48 hours. The dried product was subsequently converted into a pulverulent state by means of a centrifugal mill. The average particle diameter of the accelerator powder was 40 to 60 µm. The particle size here was determined in accordance with the standard edana 420.2-02.

### Application examples

Table 1 contains example compositions of the powders of the invention.

**Table 1: Inventive compositions and comparative examples**

| | **Initial mass of cationic water-soluble copolymer** | **Amount of C-S-H suspension DP1** |
|---|---|---|
| Powder 1 | 12.35 g Magnafloc® LT37 (solids 40.5%)¹ | 131.9 ml |
| Powder 2 | 24.7 g Magnafloc® LT37 (solids 40.5%)¹ | 131.9 ml |
| Powder 3 | 5 g Starvis® 2006 F ² | 131.9 ml |
| Powder 4 | 10 g Starvis® 2006 F ² | 131.9 ml |
| Powder 5 | 50 g polymer 1 (solids 20%) | 131.9 ml |
| Powder 6 | 50 g copolymer 2 (solids 20%) | 131.9 ml |
| Powder 7 | 50 g copolymer 3 (solids 20%) | 131.9 ml |
| Powder comparison 1 | 5 g Starvis® T50 F³ | 131.9 ml |

| | | |
|---|---|---|
| ¹ Magnafloc® LT37 (polydiallyldimethylammonium chloride) is a product of BASF SE. ² Starvis® 2006 F is a product of BASF Construction Polymers GmbH. ³ Starvis® T50 F is a non-cationic polymer product of BASF Construction Polymers GmbH. | | |

In order to test the activity of the inventive powders obtained, 6-hour strengths were determined in a standard mortar (prisms in analogy to DIN EN 196-1, produced in Styropor prism moulds).

Standard mortar formulation: 225 g water
1350 g standard sand
450 g CEM I 52.5 R Milke

As reference experiments, the following mixtures were tested:
Comparative 1: blank without addition of accelerator
Comparative 2: with aqueous C-S-H suspension (DP1)
Comparative 3: with a powder obtained from the C-S-H suspension DP1 by drying at 60°C in a forced-air drying cabinet without any additions.

**Table 2: Flexural tensile strengths and compressive strengths**

| | **Addition [g]** | **Flexural tensile strength [N/mm²] after 6 h** | **Compressive strength [N/mm²] after 6 h** |
|---|---|---|---|
| Comparative 1 (blank without addition of accelerator) | - | not measurable, prism falls apart on demoulding | not measurable, prism falls apart on demoulding |
| Comparative 2¹ (aqueous C-S-H suspension DP1) | 59.1 | 3.4 | 14.3 |
| Comparative 3 (C-S-H suspension DP1 dried at 60°C) | 4.7 | 0.5 | 1.8 |
| Comparative 4 (powder comparison 1) | 7.0 | not measurable, prism falls apart on demoulding | not measurable, prism falls apart on demoulding |
| | | | |
| Powder 1 | 7.0 | 1.6 | 5.2 |
| Powder 2 | 9.2 | 2.8 | 9.4 |
| Powder 3 | 7.0 | 1.3 | 4.3 |
| Powder 4 | 9.2 | 2.5 | 10.2 |
| Powder 5 | 9.2 | 2.9 | 11.8 |
| Powder 6 | 9.2 | 2.8 | 10.3 |
| Powder 7 | 9.2 | 3.1 | 10.9 |

| | | | |
|---|---|---|---|
| ¹ The mixing water in this mortar mixture was reduced by 54.4 g in order to set the same water/cement ratio. | | | |

When the inventive powders were used it was possible to show that the activity of the inventive powders as accelerators during drying is improved significantly in comparison to reference experiment 3 with the C-S-H powder dried without addition of polymer; in other words, the 6h strengths are significantly higher.

## Claims

1. Solid pulverulent composition comprising calcium silicate hydrate, where the calcium silicate hydrate does not originate from a hydration reaction of cement with water, and at least one water-soluble cationic (co)polymer, the (co)polymer comprising the following structural units:
a) 0 to 100 mol% of cationic structural units according to the general Formula (I) 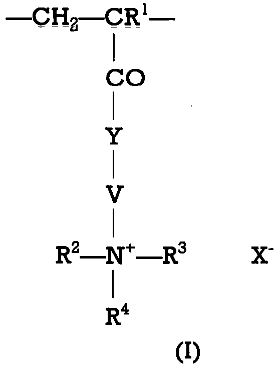 in which
R¹ is in each case identical or different and is represented by hydrogen and/or a methyl radical,
R² and R³ are in each case identical or different and independently of one another are each represented by hydrogen, an aliphatic hydrocarbon radical having 1 to 20 C atoms, a cycloaliphatic hydrocarbon radical having 5 to 8 C atoms and/or an aryl radical having 6 to 14 C atoms,
R⁴ is in each case identical or different and is represented by a substituent identical to R² or R³ or by -(CH₂)ₓ-SO₃Mₖ, 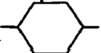 SO₃Mₖ and/or 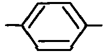 SO₃Mₖ,
M is in each case identical or different and is represented by a monovalent or divalent metal cation, ammonium cation and/or quaternary ammonium cation,
k is in each case identical or different and is represented by ½ and/or 1,
Y is in each case identical or different and is represented by oxygen, -NH and/or -NR²,
V is in each case identical or different and is represented by -(CH₂)ₓ-, 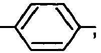 and/or 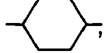
x is in each case identical or different and is represented by an integer from 1 to 6,
X⁻ is in each case identical or different and is represented by a halide, C₁- to C₄-alkylsulphate and/or C₁- to C₄-alkylsulphonate,
and/or
b) 0 to 100 mol% of cationic structural units according to the general Formula (II) 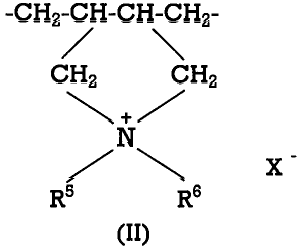 where
R⁵, R⁶ = hydrogen, aliphatic hydrocarbon radical having 1 to 6 C atoms, phenyl radical optionally substituted by methyl groups, and
X⁻ has the definitions stated above,
with the proviso that the sum of the cationic structural units according to the general Formula (I) and/or the general Formula (II) is at least 5 mol%, based on all structural units, **characterized in that** the (co)polymer comprises no structural units which derive from monomers which have more than one radically polymerizable, ethylenically unsaturated vinyl group and/or other crosslinking structural units and that the weight ratio of the (co)polymer to the calcium silicate hydrate is from 5:1 to 1:3.

2. Composition according to Claim 1, where the water-soluble (co)polymer comprises
c) 1 to 95 mol% of anionic, sulpho-group-containing structural units according to the general Formula (III) 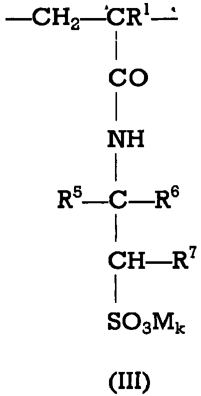
k, R¹, R⁵ and R⁶ each have the definitions stated above and
R⁷ = hydrogen, aliphatic hydrocarbon radical having 1 to 6 C atoms, phenyl radical optionally substituted by methyl groups
M = hydrogen, monovalent or divalent metal cation, ammonium or an organic amine radical.

3. Composition according to Claim 1, where the (co)polymer comprises
d) 10 to 95 mol% of amido-group-containing structural units according to the general Formulae (IVa) and/or (IVb) 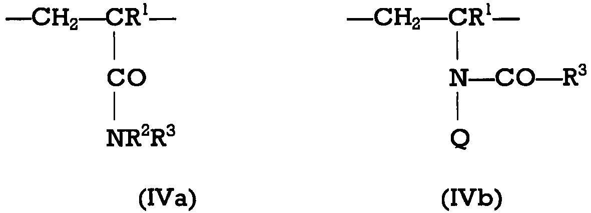 in which
Q is in each case identical or different and is represented by hydrogen and/or -CHR²R⁵,
R¹, R² and R³ each have the definitions stated above, with the proviso that if Q is not hydrogen, R² and R³ in the general Formula (IVb) may together be a -CH₂-(CH₂)_{y}-methylene group, and so the general Formula (IVb) is present according to the following structure: 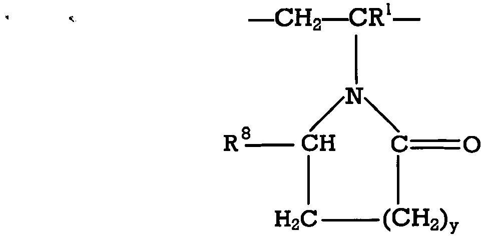
where
R⁸ is in each case identical or different and is also represented by a hydrogen atom, a C₁- to C₄-alkyl radical, a carboxylic acid group and/or a carboxylate group COOMₖ, where y is in each case identical or different and is represented by an integer from 1 to 4, preferably 1 or 2, and also M and k each have the definitions stated above.

4. Composition according to Claim 1, comprising 1 to 86 mol% of anionic, sulpho-group-containing structural units according to the general Formula (III) and 9 to 94 mol% of amido-group-containing structural units according to the general Formulae (IVa) and/or (IVb).

5. Composition according to any of Claims 1 to 4, **characterized in that** in the (co)polymers, based on the total molar number of all monomers, there are less than 20 mol% of carboxylic monomers in copolymerized form.

6. Process for producing pulverulent compositions according to any of Claims 1 to 5, where the following process steps are carried out:
a) contacting an aqueous suspension of calcium silicate hydrate with at least one (co)polymer according to any of Claims 1 to 5, and
b) drying the product from step a), preferably at temperatures between 30 and 80°C, especially at temperatures between 40 and 60°C.

7. Process according to Claim 6, **characterized in that** drying in a forced-air drying oven or drying in a fluidized bed process is employed.

8. Process according to Claim 6 or Claim 7, **characterized in that** the aqueous suspension of calcium silicate hydrate has been obtained by reacting a water-soluble calcium compound with a water-soluble silicate compound, the reaction of the water-soluble calcium compound with the water-soluble silicate compound taking place in the presence of an aqueous solution which comprises a water-soluble comb polymer which is suitable as a plasticizer for hydraulic binders.

9. Process according to Claim 6 or Claim 7, **characterized in that** the aqueous suspension of calcium silicate hydrate has been obtained by reacting a water-soluble calcium compound with a water-soluble silicate compound, the reaction of the water-soluble calcium compound with the water-soluble silicate compound taking place in the presence of an aqueous solution which preferably comprises a (co)polymer containing carboxylic acid groups and/or carboxylate groups and sulphonic acid groups and/or sulphonate groups, the molar ratio of the number of carboxylic acid groups and/or carboxylate groups to the sulphonic acid groups and/or sulphonate groups being from 1/20 to 20/1, preferably 1/5 to 5/1, more preferably 1/2 to 2/1.

10. Process according to any of Claims 6 to 9, **characterized in that** there follows a process step c) which comprises the grinding of the dried products from process step b) to powders.

11. Use of compositions according to any of Claims 1 to 5 as setting accelerators in building material mixtures comprising cement, slag sand, fly ash, silica dust, metakaolin, natural pozzolans, burnt oil shale and/or calcium aluminate cement, or in building material mixtures comprising cement and calcium sulphate-based binders, preferably in building material mixtures which as hydraulic binder comprise substantially cement.

12. Use of compositions according to any of Claims 1 to 5 as grinding aids in the production of cement, slag, fly ash, lime and/or pozzolans, preferably for cement.

13. Building material mixtures comprising compositions according to any of Claims 1 to 5 and cement, slag sand, fly ash, silica dust, metakaolin, natural pozzolans, burnt oil shale and/or calcium aluminate cement, or building material mixtures comprising compositions according to any of Claims 1 to 5, cement and calcium sulphate-based binders, preferably building material mixtures which as hydraulic binder comprise substantially cement.

## Patentansprüche

1. Feste pulverförmige Zusammensetzung, enthaltend Calciumsilikathydrat, wobei das Calciumsilikathydrat nicht aus einer Hydratisierungsreaktion von Zement mit Wasser stammt, und mindestens ein wasserlösliches kationisches (Co)polymer, wobei das (Co)polymer folgende Struktureinheiten enthält:
a) 0 bis 100 Mol-% kationische Struktureinheiten gemäß der allgemeinen Formel (I) 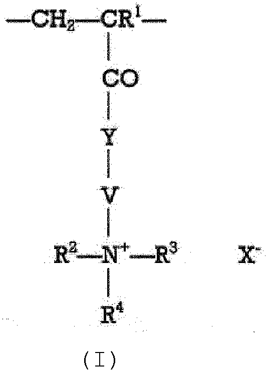 worin
R¹ jeweils gleich oder verschieden ist und durch Wasserstoff und/oder einen Methylrest repräsentiert wird,
R² und R³ jeweils gleich oder verschieden sind und unabhängig voneinander jeweils durch Wasserstoff, einen aliphatischen Kohlenwasserstoffrest mit 1 bis 20 C-Atomen einen cycloaliphatischen Kohlenwasserstoffrest mit 5 bis 8 C-Atomen und/oder einen Arylrest mit 6 bis 14 C-Atomen repräsentiert werden,
R⁴ jeweils gleich oder verschieden ist und durch einen mit R² oder R³ identischen Substituenten oder durch -(CH₂)ₓ-SO₃Mₖ, 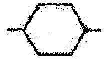 SO₃Mₖ und/oder 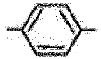 SO₃Mₖ repräsentiert wird,
M jeweils gleich oder verschieden ist und durch ein ein- oder zweiwertiges Metallkation, Ammoniumkation und/oder quarternäres Ammoniumkation repräsentiert wird,
k jeweils gleich oder verschieden ist und durch ½ und/oder 1 repräsentiert wird,
Y jeweils gleich oder verschieden ist und durch Sauerstoff, -NH und/oder -NR² repräsentiert wird,
V jeweils gleich oder verschieden ist und durch -(CH₂)ₓ, 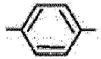 und/oder 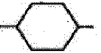 repräsentiert wird,
x jeweils gleich oder verschieden ist und durch eine ganze Zahl von 1 bis 6 repräsentiert wird,
X⁻ jeweils gleich oder verschieden ist und durch ein Halogenid C₁- bis C₄-Alkyl-sulfat und/oder C₁- bis C₄-Alkylsulfonat repräsentiert wird,
und/oder
b) 0 bis 100 Mol-% kationische Struktureinheiten gemäß der allgemeinen Formel (II) 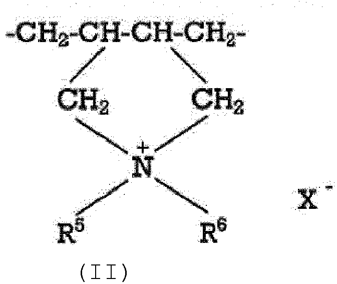 wobei
R⁵, R⁶ = Wasserstoff, aliphatischer Kohlenwasserstoffrest mit 1 bis 6 C-Atomen, gegebenenfalls mit Methylgruppen substituierter Phenylrest, und
X⁻ die vorstehend genannten Bedeutungen hat,
mit der Maßgabe, dass die Summe der kationischen Struktureinheiten gemäß der allgemeinen Formel (I) und/oder der allgemeinen Formel (II) mindestens 5 Mol-%, bezogen auf alle Struktureinheiten, beträgt, **dadurch gekennzeichnet, dass** das (Co)-polymer keine Struktureinheiten, die sich von Monomeren mit mehr als einer radikalisch polymerisierbaren, ethylenisch ungesättigten Vinylgruppe ableiten, und/oder anderen vernetzenden Struktureinheiten enthält und dass das Gewichtsverhältnis von (Co)polymer zu dem Calciumsilikathydrat 5:1 bis 1:3 beträgt.

2. Zusammensetzung nach Anspruch 1, wobei das wasserlösliche (Co)polymer
c) 1 bis 95 Mol-% anionische sulfogruppenhaltige Struktureinheiten gemäß der allgemeinen Formel (III) 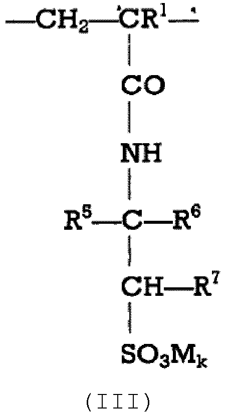
k, R¹, R⁵ und R⁶ jeweils die vorstehend genannten Bedeutungen haben und
R⁷ = Wasserstoff, aliphatischer Kohlenwasserstoffrest mit 1 bis 6 C-Atomen, gegebenenfalls mit Methylgruppen substituierter Phenylrest,
M = Wasserstoff, ein- oder zweiwertiges Metallkation, Ammonium oder ein organischer Aminrest,
enthält.

3. Zusammensetzung nach Anspruch 1, wobei das (Co)-polymer
d) 10 bis 95 Mol-% Aminogruppenhaltige Struktureinheiten gemäß den allgemeinen Formeln (IVa) und/oder (IVb) 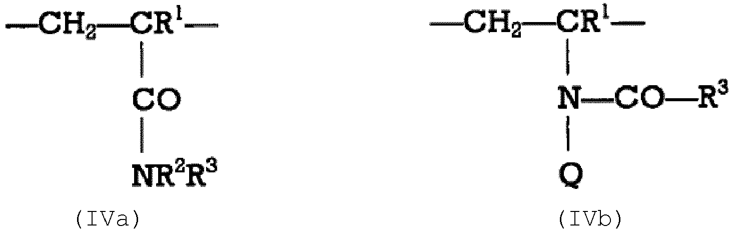 worin
Q jeweils gleich oder verschieden ist und durch Wasserstoff und/oder -CHR²R⁵ repräsentiert wird,
R¹, R² und R³ jeweils die vorstehenden Bedeutungen haben, mit der Maßgabe, dass im Fall von Q ungleich Wasserstoff R² und R³ in der allgemeinen Formel (IVb) zusammen für eine -CH₂-(CH₂)_{y}-Methylengruppe stehen können, so dass die allgemeine Formel (IVb) gemäß folgender Struktur vorliegt: 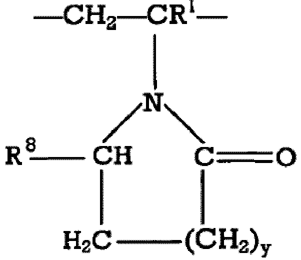
wobei
R⁸ jeweils gleich oder verschieden ist sowie durch ein Wasserstoffatom, einen C₁- bis C₄-Alkylrest, eine Carbonsäuregruppe und/oder eine Carboxylatgruppe COOMₖ repräsentiert wird, wobei y jeweils gleich oder verschieden ist und durch eine ganze Zahl von 1 bis 4 repräsentiert wird, vorzugsweise 1 oder 2, sowie M und k jeweils die vorstehend genannten Bedeutungen haben,
enthält.

4. Zusammensetzung nach Anspruch 1, enthaltend 1 bis 86 Mol-% anionische sulfogruppenhaltige Struktureinheiten gemäß der allgemeinen Formel (III) und 9 bis 94 Mol-% amidogruppenhaltige Struktureinheiten gemäß den allgemeinen Formeln (IVa) und/oder (IVb).

5. Zusammensetzung nach einem der Ansprüche 1 bis 4, **dadurch gekennzeichnet, dass** in den (Co)polymeren, bezogen auf die Gesamtmolzahl aller Monomere, weniger als 20 Mol-% carboxylische Monomere in einpolymerisierter Form enthalten sind.

6. Verfahren zur Herstellung von pulverförmigen Zusammensetzungen nach einem der Ansprüche 1 bis 5, wobei folgende Verfahrensschritte durchgeführt werden:
a) Inkontaktbringen einer wässrigen Suspension von Calciumsilikathydrat mit mindestens einem (Co)-polymer nach einem der Ansprüche 1 bis 5 und
b) Trocknen des Produkts aus Schritt a), vorzugsweise bei Temperaturen zwischen 30 und 80 °C, insbesondere bei Temperaturen zwischen 40 und 60 °C.

7. Verfahren nach Anspruch 6, **dadurch gekennzeichnet, dass** eine Trocknung im Umlufttrockenschrank oder eine Trocknung im Wirbelbettverfahren zum Einsatz kommt.

8. Verfahren nach Anspruch 6 oder Anspruch 7, **dadurch gekennzeichnet, dass** die wässrige Suspension von Calciumsilikathydrat durch Umsetzung einer wasserlöslichen Calciumverbindung mit einer wasserlöslichen Silikatverbindung erhalten wurde, wobei die Umsetzung der wasserlöslichen Calciumverbindung mit der wasserlöslichen Silikatverbindung in Anwesenheit einer wässrigen Lösung erfolgt, welche ein wasserlösliches, sich als Fließmittel für hydraulische Bindemittel eignendes Kammpolymer enthält.

9. Verfahren nach Anspruch 6 oder Anspruch 7, **dadurch gekennzeichnet, dass** die wässrige Suspension von Calciumsilikathydrat durch Umsetzung einer wasserlöslichen Calciumverbindung mit einer wasserlöslichen Silikatverbindung erhalten wurde, wobei die Umsetzung der wasserlöslichen Calciumverbindung mit der wasserlöslichen Silikatverbindung in Anwesenheit einer wässrigen Lösung erfolgt, welche bevorzugt ein (Co)polymer mit Carbonsäuregruppen und/oder Carboxylatgruppen und Sulfonsäuregruppen und/oder Sulfonatgruppen enthält, wobei das Molverhältnis der Anzahl von Carbonsäuregruppen und/oder Carboxylatgruppen zu den Sulfonsäuregruppen und/oder Sulfonatgruppen von 1/20 bis 20/1, bevorzugt 1/5 bis 5/1, weiter bevorzugt 1/2 bis 2/1, beträgt.

10. Verfahren nach einem der Ansprüche 6 bis 9, **dadurch gekennzeichnet, dass** sich ein Verfahrensschritt c) anschließt, welcher das Vermahlen der getrockneten Produkte aus Verfahrensschritt b) zu Pulvern umfasst.

11. Verwendung von Zusammensetzungen nach einem der Ansprüche 1 bis 5 als Erhärtungsbeschleuniger in Zement, Hüttensand, Flugasche, Silikastaub, Metakaolin, natürliche Puzzolane, gebrannte Ölschiefer und/oder Calciumaluminatzement enthaltenden Baustoffmischungen oder in Zement und auf Calciumsulfat basierende Bindemittel enthaltenden Baustoffmischungen, bevorzugt in Baustoffmischungen, die als hydraulisches Bindemittel im Wesentlichen Zement enthalten.

12. Verwendung von Zusammensetzungen nach einem der Ansprüche 1 bis 5 als Mahlhilfsmittel bei der Herstellung von Zement, Schlacke, Flugasche, Kalk und/oder Puzzolanen, bevorzugt für Zement.

13. Baustoffmischungen, enthaltend Zusammensetzungen nach einem der Ansprüche 1 bis 5 und Zement, Hüttensand, Flugasche, Silikastaub, Metakaolin, natürliche Puzzolane, gebrannte Ölschiefer und/oder Calciumaluminatzement, oder Baustoffmischungen, enthaltend Zusammensetzungen nach einem der Ansprüche 1 bis 5, Zement und auf Calciumsulfat basierende Bindemittel, bevorzugt Baustoffmischungen, die als hydraulisches Bindemittel im Wesentlichen Zement enthalten.

## Revendications

1. Composition pulvérulente solide comprenant du silicate de calcium hydraté, le silicate de calcium hydraté ne provenant pas d'une réaction d'hydratation de ciment avec de l'eau, et au moins un polymère ou copolymère cationique hydrosoluble, le polymère ou copolymère comprenant les motifs de structure suivants :
a) 0 à 100 % en mole de motifs de structure cationiques répondant à la formule générale (I) 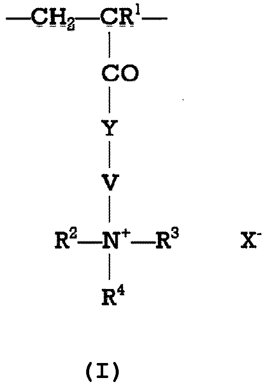 dans laquelle
R¹ est dans chaque cas identique ou différent et représente l'atome d'hydrogène et/ou un radical méthyle,
R² et R³ sont dans chaque cas identiques ou différents et représentent chacun indépendamment de l'autre l'atome d'hydrogène, un radical hydrocarboné aliphatique ayant 1 à 20 atomes de C, un radical hydrocarboné cycloaliphatique ayant 5 à 8 atomes de C et/ou un radical aryle ayant 6 à 14 atomes de C
R⁴ est dans chaque cas identique ou différent et représente un substituant identique à R² ou R³ ou -(CH₂)ₓ-SO₃Mₖ, 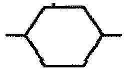 SO₃Mₖ et/ou 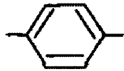 SO₃Mₖ,
M est dans chaque cas identique ou différent et représente un cation métallique monovalent ou divalent, un cation ammonium et/ou un cation ammonium quaternaire,
k est dans chaque cas identique ou différent et représente ½ et/ou 1,
Y est dans chaque cas identique ou différent et représente l'atome d'oxygène, -NH et/ou -NR²,
V est dans chaque cas identique ou différent et représente -(CH₂)ₓ-, 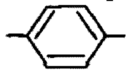 et/ou 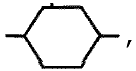
x est dans chaque cas identique ou différent et représente un nombre entier de 1 à 6,
X⁻ est dans chaque cas identique ou différent et représente un ion halogénure, (alkyl en C₁ à C₄)sulfate et/ou (alkyl en C₁ à C₄)sulfonate
et/ou
b) 0 à 100 % en mole de motifs de structure cationiques répondant à la formule générale (II) 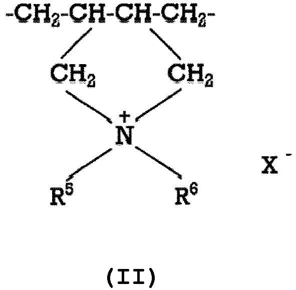 où
R⁵, R⁶ = l'atome d'hydrogène, un radical hydrocarboné aliphatique ayant 1 à 6 atomes de C, un radical phényle éventuellement substitué par des groupes méthyle et
X⁻ a les définitions indiquées ci-dessus,
à condition que la somme des motifs de structure cationiques répondant à la formule générale (I) et/ou la formule générale (II) soit d'au moins 5 % en mole, par rapport à tous les motifs de structure,
**caractérisée en ce que** le polymère ou copolymère ne comprend pas de motifs de structure qui dérivent de monomères qui ont plus d'un groupe vinyle à insaturation éthylénique polymérisable par voie radicalaire et/ou d'autres motifs de structure de réticulation et **en ce que** le rapport pondéral du polymère ou copolymère au silicate de calcium hydraté est de 5:1 à 1:3.

2. Composition selon la revendication 1, où le polymère ou copolymère hydrosoluble comprend
c) 1 à 95 % en mole de motifs de structure anioniques contenant un groupe sulfo répondant à la formule générale (III) 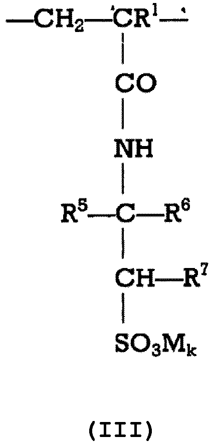
k, R¹, R⁵ et R⁶ ont chacun les définitions indiquées ci-dessus et
R⁷ = l'atome d'hydrogène, un radical hydrocarboné aliphatique ayant 1 à 6 atomes de C, un radical phényle éventuellement substitué par des groupes méthyle
M = l'atome d'hydrogène, un cation métallique monovalent ou divalent, un ion ammonium ou un radical amine organique.

3. Composition selon la revendication 1, où le polymère ou copolymère comprend
d) 10 à 95 % en mole de motifs de structure contenant un groupe amido répondant aux formules générales (IVa) et/ou (IVb) 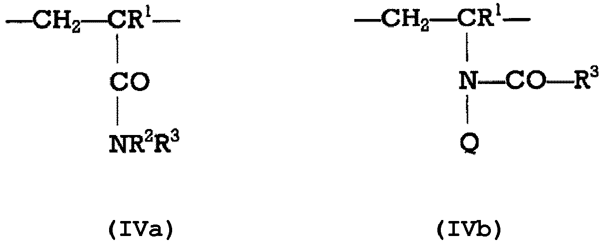 dans lesquelles
Q est dans chaque cas identique ou différent et représente l'atome d'hydrogène et/ou -CHR²R⁵,
R¹, R² et R³ ont chacun les définitions indiquées ci-dessus, à condition que si Q n'est pas l'atome d'hydrogène, R² et R³ dans la formule générale (IVb) puissent être ensemble un groupe -CH₂-(CH₂)_{y}-méthylène et donc la formule générale (IVb) soit présente selon la structure suivante : 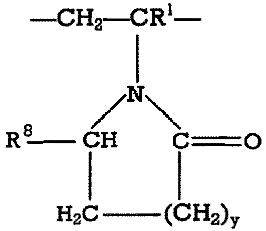
où
R⁸ est dans chaque cas identique ou différent et représente également un atome d'hydrogène, un radical alkyle en C₁ à C₄, un groupe acide carboxylique et/ou un groupe carboxylate COOMₖ, y étant dans chaque cas identique ou différent et représentant un nombre entier de 1 à 4, de préférence 1 ou 2, et également M et k ayant chacun les définitions indiquées ci-dessus.

4. Composition selon la revendication 1, comprenant 1 à 86 % en mole de motifs de structure anioniques contenant un groupe sulfo répondant à la formule générale (III) et 9 à 94 % en mole de motifs de structure contenant un groupe amido répondant aux formules générales (IVa) et/ou (IVb).

5. Composition selon l'une quelconque des revendications 1 à 4, **caractérisée en ce que** dans les polymères ou copolymères, par rapport au nombre total de moles de tous les monomères, il y a moins de 20 % en mole de monomères carboxyliques sous forme copolymérisée.

6. Procédé pour la production de compositions pulvérulentes selon l'une quelconque des revendications 1 à 5, où les étapes de procédé suivantes sont effectuées :
a) la mise en contact d'une suspension aqueuse de silicate de calcium hydraté avec au moins un polymère ou copolymère selon l'une quelconque des revendications 1 à 5 et
b) le séchage du produit provenant de l'étape a), de préférence à des températures comprises entre 30 et 80 °C, en particulier à des températures comprises entre 40 et 60 °C.

7. Procédé selon la revendication 6, **caractérisé en ce qu'**un séchage dans un four de séchage à air forcé ou un séchage dans un procédé à lit fluidisé est employé.

8. Procédé selon la revendication 6 ou la revendication 7, **caractérisé en ce que** la suspension aqueuse de silicate de calcium hydraté a été obtenue par réaction d'un composé hydrosoluble du calcium avec un composé silicate hydrosoluble, la réaction du composé hydrosoluble du calcium avec le composé silicate hydrosoluble ayant lieu en présence d'une solution aqueuse qui comprend un polymère en peigne hydrosoluble qui est approprié en tant que plastifiant pour des liants hydrauliques.

9. Procédé selon la revendication 6 ou la revendication 7, **caractérisé en ce que** la suspension aqueuse de silicate de calcium hydraté a été obtenue par réaction d'un composé hydrosoluble du calcium avec un composé silicate hydrosoluble, la réaction du composé hydrosoluble du calcium avec le composé silicate hydrosoluble ayant lieu en présence d'une solution aqueuse qui comprend de préférence un polymère ou copolymère contenant des groupes acide carboxylique et/ou des groupes carboxylate et des groupes acide sulfonique et/ou des groupes sulfonate, le rapport molaire du nombre de groupes acide carboxylique et/ou groupes carboxylate aux groupes acide sulfonique et/ou groupes sulfonate étant de 1/20 à 20/1, de préférence de 1/5 à 5/1, de préférence encore de 1/2 à 2/1.

10. Procédé selon l'une quelconque des revendications 6 à 9, **caractérisé en ce que** suit une étape de procédé c) qui comprend le broyage des produits séchés provenant de l'étape de procédé b) en poudres.

11. Utilisation de compositions selon l'une quelconque des revendications 1 à 5 en tant qu'accélérateurs de prise dans des mélanges pour matériaux de construction comprenant du ciment, du sable de laitier, des cendres volantes, de la farine de quartz, du métakaolin, des pouzzolanes naturelles, du schiste bitumineux brûlé et/ou du ciment d'aluminate de calcium ou dans des mélanges pour matériaux de construction comprenant du ciment et des liants à base de sulfate de calcium, de préférence dans des mélanges pour matériaux de construction qui en tant que liant hydraulique comprennent essentiellement du ciment.

12. Utilisation de compositions selon l'une quelconque des revendications 1 à 5 en tant qu'adjuvants de broyage dans la production de ciment, de laitier, de cendres volantes, de chaux et/ou de pouzzolanes, de préférence pour du ciment.

13. Mélanges pour matériaux de construction comprenant des compositions selon l'une quelconque des revendications 1 à 5 et du ciment, du sable de laitier, des cendres volantes, de la farine de quartz, du métakaolin, des pouzzolanes naturelles, du schiste bitumineux brûlé et/ou du ciment d'aluminate de calcium ou mélanges pour matériaux de construction comprenant des compositions selon l'une quelconque des revendications 1 à 5, du ciment et des liants à base de sulfate de calcium, de préférence mélanges pour matériaux de construction qui en tant que liant hydraulique comprennent essentiellement du ciment.
